**Europäisches Patentamt**

**European Patent Office**

**Office européen des brevets**

(19)

(11) Veröffentlichungsnummer : **0 406 877 B1**

(12) **EUROPÄISCHE PATENTSCHRIFT**

(45) Veröffentlichungstag der Patentschrift :
**12.04.95 Patentblatt 95/15**

(51) Int. Cl.⁶ : **G01S 13/90**

(21) Anmeldenummer : **90112922.1**

(22) Anmeldetag : **06.07.90**

(54) **Verfahren zur Extraktion von Bewegungsfehlern eines ein kohärentes Abbildungsradarsystem mit führenden Trägers aus Radar-Rohdaten und Einrichtung zur Durchführung des Verfahrens.**

(30) Priorität : **07.07.89 DE 3922428**

(43) Veröffentlichungstag der Anmeldung :
**09.01.91 Patentblatt 91/02**

(45) Bekanntmachung des Hinweises auf die
Patenterteilung :
**12.04.95 Patentblatt 95/15**

(84) Benannte Vertragsstaaten :
**DE FR GB SE**

(56) Entgegenhaltungen :
**WO-A-88/10434**
**GB-A- 2 185 869**
**US-A- 4 771 287**
**IEEE TRANSACTIONS ON GEOSCIENCE AND
REMOTE CONTROL, Band 28, Nr. 4, Juli
1990,Seiten 620-626, IEEE, New York, US; J.R.
MOREIRA: "A new method of aircraft motion
error extraction from radar raw data for real
time motion compensation"**

(56) Entgegenhaltungen :
**IEEE IGARSS'89, 12TH CANADIAN SYMPO-
SIUM ON REMOTE SENSING, Vancouver, 10. -
14.Juli 1989, Band 4, Seiten 2217-2220, IEEE,
New York, US; J.R. MOREIRA: "A new method
of aircraft motion error extraction from radar
raw data for real time SAR motion compensation"**
**IEEE INTERNATIONAL RADAR CONFEREN-
CE, Arlington, Virginia, 7. - 10. Mai 1990,Seiten
70-75, IEEE, New York, US; J. MOREIRA:
"Estimating the residual error of the reflectivity displacement method for aircraft motion
error extraction from SAR raw data"**

(73) Patentinhaber : **Deutsche Forschungsanstalt
für Luft- und Raumfahrt e.V.
Linder Höhe
Postfach 90 60 58
D-51126 Köln (DE)**

(72) Erfinder : **Moreira, Joao
Ludwig-Ganghofer-Strasse 24
D-8910 Landsberg (DE)**

(74) Vertreter : **von Kirschbaum, Albrecht, Dipl.-Ing.
Patentanwalt,
Postfach 15 20
D-82102 Germering (DE)**

EP 0 406 877 B1

EP 0 406 877 B1

**Beschreibung**

Die Erfindung betrifft ein Verfahren zur Extraktion von Bewegungsfehlern eines Trägers in einem mitgeführten, kohärenten Abbildungsradarsystem, nach dem Oberbegriff des Anspruchs 1 und eine Einrichtung zur Durchführung des Verfahrens nach dem Oberbegriff des Anspruchs 2.

Ein derartiges Verfahren und eine solche Einrichtung sind aus US-A-4 771 287 bekannt.

Kohärente Abbildungsradarsysteme sind in einen Träger, wie beispielsweise in einem Flugzeug, einen Flugkörper oder einen Hubschrauber u.ä., eingebaut. Aufgrund der bei solchen Trägern vorliegenden Gegebenheiten und aufgrund der Einflüsse der Umgebung, wie beispielsweise Turbulenzen, kann ein Träger eine vorgegebene Flugbahn normalerweise nicht einhalten. Der Träger weicht vielmehr von der gewünschten Sollflugbahn ab, was als Bewegungsfehler bezeichnet wird. Bei kohärenten Abbildungsradarsystemen verursachen Bewegungsfehler, welche in der Größenordnung der Wellenlänge des Radar-Sendesignals liegen, Verzerrungen, durch welche die Qualität einer Abbildung ganz wesentlich beeinträchtigt wird. Die Qualität einer Abbildung wird nach ihrer Auflösung, dem Kontrast sowie den geometrischen Verzerrungen beurteilt.

Um bei einer Abbildung eine hohe Auflösung, einen hohen Kontrast und niedrige geometrische Verzerrungen zu erreichen, müssen die empfangenen Rohdaten vor der Prozessierung bzw. Generierung des Bildes korrigiert werden. Eine solche Korrektur kann in Echtzeit oder off-line durchgeführt werden. Eine Echtzeit-Korrektur erfolgt während des Empfangs von Rückstreusignalen mit Hilfe digitaler oder analoger Stellglieder.

Eine Off-line-Korrektur wird am Boden nach einer Abspeicherung der Rohdaten mit Hilfe von Rechenprogrammen durchgeführt.

Erst nach einer Korrektur, was als Bewegungskompensation bezeichnet wird, kann die Prozessierung bzw. Generierung eines Bildes durchgeführt werden. Zur Generierung eines Bildes wird eine Korrelation zwischen den Rohdaten und der zu erwartenden, theoretischen Phasenhistorie vorgenommen und erst nach einer solchen Korrelation wird ein hoch-aufgelöstes zweidimenionales Bild erhalten.

Alle bekannten Echtzeit-Bewegungskompensationssysteme sind auf bordeigene Trägheitsnavigationssysteme (INS Intertial Navigation System) oder andere Nagigationssysteme, wie GPS (Global-Positioning-System) angewiesen. Bei einigen Echtzeit-Bewegungskompensationssystemen wird zusätzlich eine einfache Doppleranalyse der Radar-Rohdaten durchgeführt, um den Driftwinkel des Trägers aufgrund von Windeinflüssen oder wegen der Beleuchtungsgeometrie zu schätzen. Dies ist beispielsweise im einzelnen in einer Veröffentlichung im Zusammenhang mit einem 1988 in Kanada abgehaltenen CCRS-Symposium als Sonderdruck 88 CH 2572-6/88/0000-0015 von IEEE beschrieben.

Bei allen bekannten Off-line-Bewegungskompensationssystemen wird entweder eine ähnliche Verarbeitungsstruktur wie bei den Echtzeitsystemen angewendet und/oder es wird ferner während der Generierung des Bildes noch ein Autofokusverfahren durchgeführt.

Alle bekannten Bewegungskompensationssysteme weisen jedoch verschiedene Nachteile auf. Aufgrund der hohen Ansprüche an die Bewegungsdaten hinsichtlich der Genauigkeit, der Bandbreite und der Zeitstabilität müssen für Abbildungsradarsysteme, bei welchen eine Bewegungskompensation durchgeführt wird, beispielsweise in Sonderfertigung hergestellte Trägheitnavigationssysteme eingesetzt werden; hierdurch ergeben sich jedoch dann sehr hohe Anschaffungs-, Einbau- und Wartungskosten. Bei Anwendung von mit GPS-Empfängern arbeitenden Bewegungskompensationssystemen ist eine Unterstützung durch eine Bodenstation unverzichtbar. Dadurch sind jedoch zum einen die Betriebskosten sehr hoch, und zum anderen sind erhebliche Beschränkungen bei der Wahl des Einsatzgebietes zu erwarten. Ohne eine Unterstützung durch eine Bodenstation sind jedoch die für eine Bewegungskompensation unbedingt erforderlichen GPS-Bewegungsdaten nicht genau genug.

Obwohl die Autofokusverfahren nicht auf Trägheits-Navigationssssysteme angewiesen sind, können diese Verfahren jedoch wegen des hohen Rechenaufwands nicht in Echtzeit durchgeführt werden. Obendrein haben Autofokusverfahren keine hohe Bandbreite und besitzen auch keine hohe Genauigkeit, so daß vorzugsweise die durch Windboen hervorgerufenen Bewegungsfehler nicht korrigiert werden können. Aus diesem Grund werden Autofokusverfahren normalerweise daher nur zur Schätzung der Vorwärtsgeschwindigkeit eines Trägers eingesetzt.

Aufgabe der Erfindung ist es daher, mit einem Verfahren zur Extraktion von Bewegungsfehlern eines Trägers in einem mitgeführten kohärenten Abbildungsradarsystem aus Radar-Rohdaten sowie mit einer Einrichtung zur Durchführung dieses Verfahrens die Bildqualität der Abbildungen zu verbessern, ohne auf ein Navigationssystem, wie beispielsweise INS, zurückgreifen zu müssen.

Gemäß der Erfindung ist dies bei einem Verfahren zur Extraktion von Bewegungsfehlern eines Trägers in einem mitgeführten kohärenten Abbildungsradarsystem aus Rohdaten durch die Merkmale im kennzeichnendenTeil des Anspruchs 1 und bei einer Einrichtung zur Durchführung des erfindungsgemäßen Verfahrens durch die Merkmale im kennzeichnenden Teil des Anspruchs 2 erreicht.

2

Voraussetzung hierfür ist, daß die Bewegungsdaten eines das Abbildungsradarsystem mitführenden Trägers sehr genau bestimmt werden, damit die hierbei erhaltenen Rohdaten entsprechend korrigiert werden können; hierzu müssen folgende Bewegungen des Trägers bestimmt werden, nämlich dessen Vorwärtsgeschwindigkeit, die Ablage, d.h. die Abweichung in Blickrichtung der Antenne sowie der Driftwinkel des Trägers. Bei der Erfindung wird zur Extraktion von Bewegungsfehlern eine Trennung und Auswertung von zwei Anteilen eines Azimutspektrums durchgeführt werden, und zwar einer Trennung und Auswertung entweder eines - nachstehend so bezeichneten - Antennendiagramm-Anteils oder eines - nachstehend so bezeichneten - Rückstreuverhältnis-Anteils. Nachstehend wird lediglich die Auswertung des Rückstreuverhältnis-Anteils erläutert und abgehandelt, was der Einfachheit halber als Versatzverfahren bezeichnet ist. Hierbei wird unter Rückstreuverhältnis das Verhältnis zwischen der Leistung des empfangenen und des gesendeten Signals verstanden.

Gegenüber den eingangs erwähnten GPS-Systemen ist vor allem vorteilhaft, daß bei dem erfindungsgemäßen Bewegungsextraktionsverfahren für eine Bewegungskompensation alle notwendigen Informationen aus den Radar-Rohdaten entnommen werden. Im Unterschied zu den GPS-Systemen wird daher auch keine Bodenstation benötigt, so daß das erfindungsgemäße Verfahren erheblich flexibler und autarker einsetzbar ist.

Im Vergleich zu den Autofokus-Verfahren weist das erfindungsgemäße Bewegungsextraktionsverfahren eine viel höhere Bandbreite auf. Außerdem lassen sich viele Bewegungsfehler, wie die Beschleunigung, die Geschwindigkeit und die Ablage, d.h. die Abweichung in Blickrichtung der Antenne zusätzlich bestimmen; dies sind alles Daten, welche mit Autofokus-Verfahren nicht erhalten werden können. Obendrein ist eine Durchführung des erfindungsgemäßen Verfahrens in Echtzeit möglich, was sich bei Autofokus-Verfahren ebenfalls nicht realisieren läßt.

Nachfolgend wird die Erfindung anhand einer bevorzugten Ausführungsform unter Bezugnahme auf die anliegenden Zeichnungen erläutert. Es zeigen:

Fig.1a     schematisch eine generelle Darstellung einer Radargeometrie;

Fig.1b     ein Azimutspektrum eines Entfernungstors in Form eines Diagramms;

Fig.2a bis 2c     schematisierte Darstellungen von Diagrammen, welche in ihrer Gesamtheit ein Azimutspektrum bilden, wobei

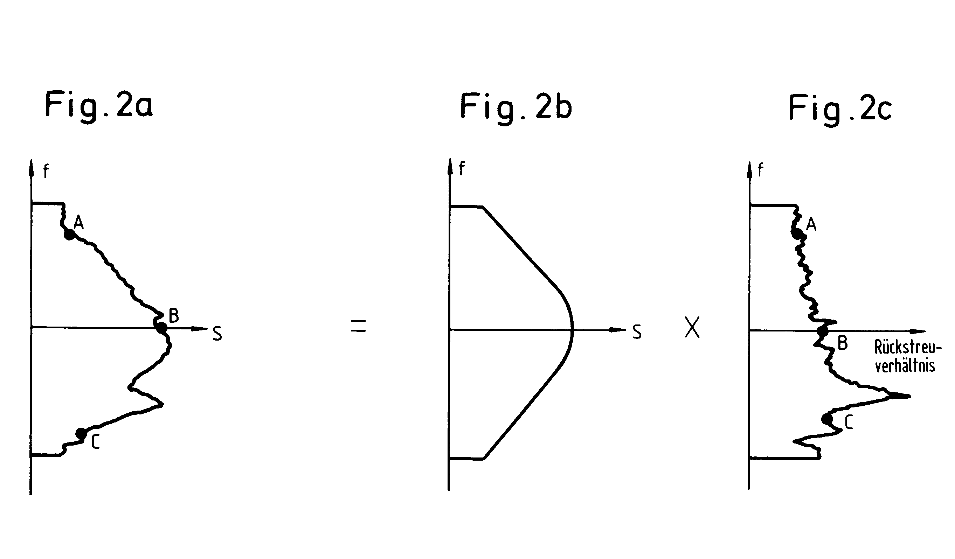

Fig.2a     schematisch das Azimutspektrum eines Entfernungstors,

Fig.2b     den schematischen Verlauf eines Spektrums eines Antennendiagramms und

Fig.2c     den schematischen Verlauf eines Spektrums eines Rückstreuverhältnisses wiedergeben;

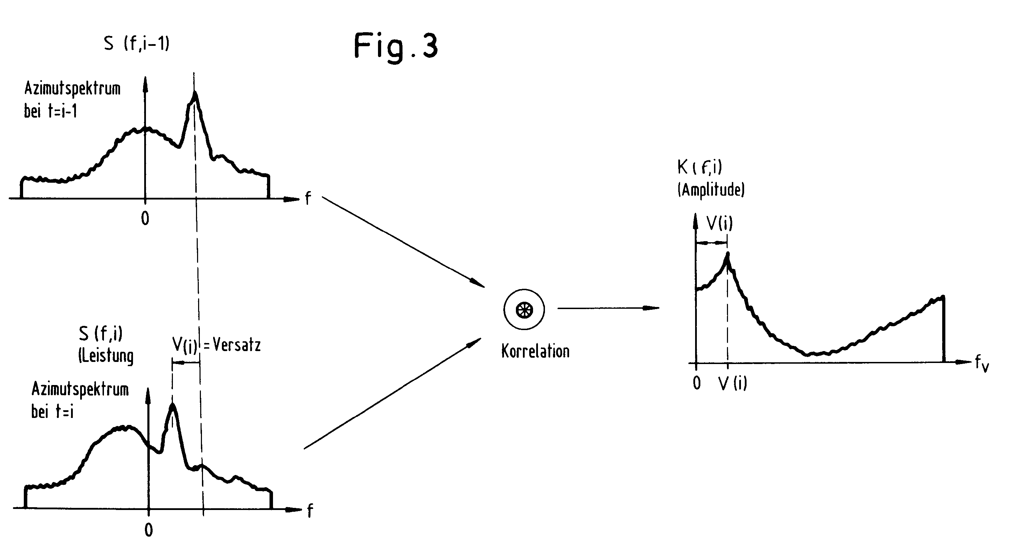

Fig.3     den schematischen Verlauf eines Azimutspektrums zu zwei unterschiedlichen Zeitpunkten ($t = i - 1$ und $t = i$) sowie deren Korrelation bei dem erfindungsgemäßen Verfahren;

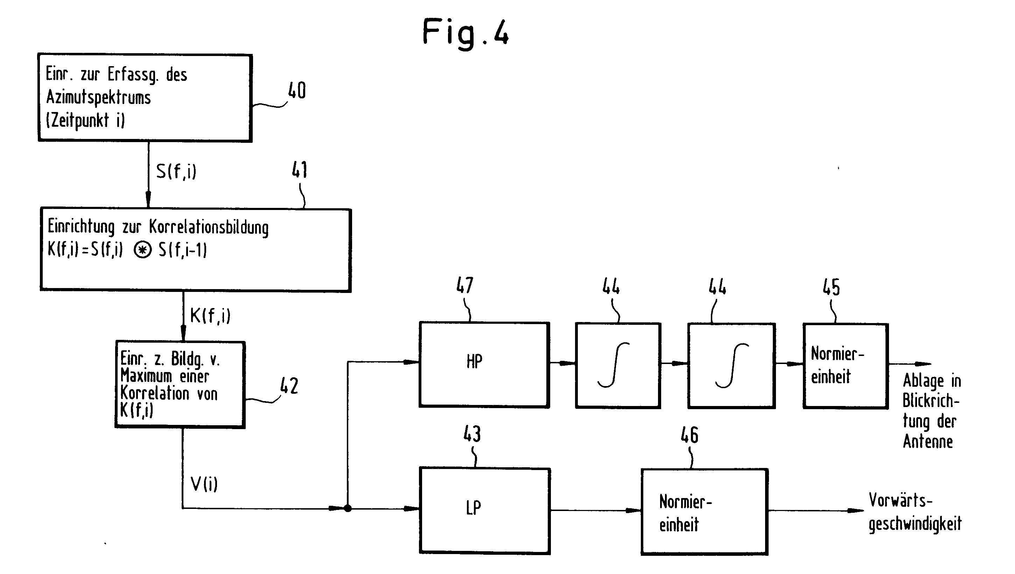

Fig.4     ein Blockdiagramm einer Einrichtung zur Durchführung des Verfahrens, und

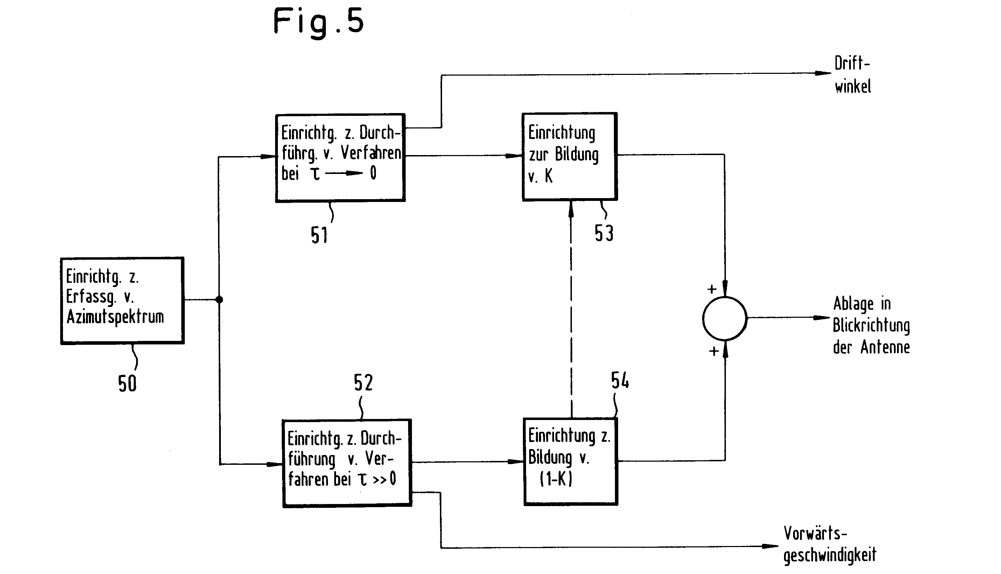

Fig.5     eine schematische Darstellung einer Verknüpfung des erfindungsgemäßen Verfahrens und eines Verfahrens zur Bestimmung eines Antennendiagramm-Anteils zur Bewertung der bezogen auf die Kontrastverhältnisse am Boden zweckmäßigen Bewegungsextraktion.

Bei dem erfindungsgemäßen Verfahren zur Extraktion von Bewegungsfehlern wird grundsätzlich das Azimutspektrum der Radar-Rohdaten und nachstehend inbesondere der aus dem Rückstreuverhältnis stammende Anteil ausgewertet; nachstehend wird, wie schon erwähnt, dieses Verfahren der Einfachheit halber als Versatzverfahren bezeichnet.

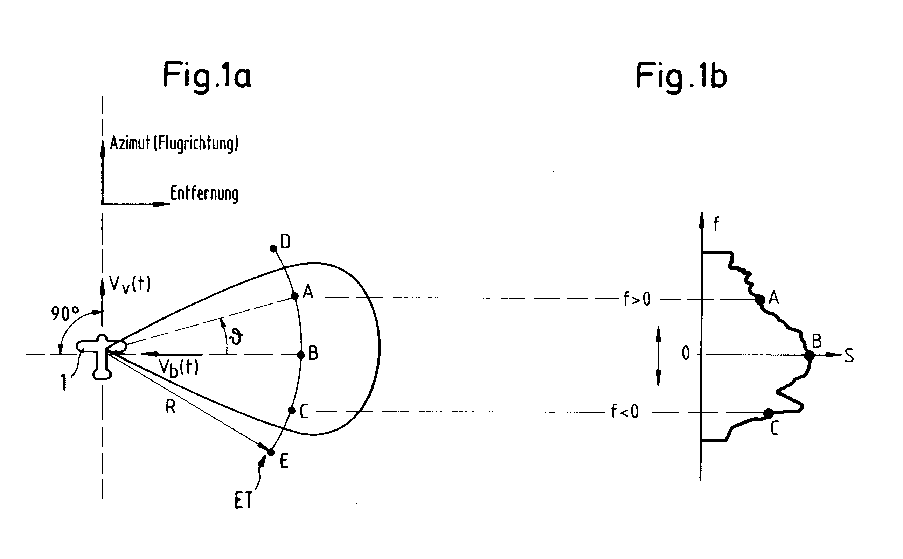

In Fig. 1a ist ein Beispiel einer üblichen Radargeometrie und des entsprechenden Azimutspektrums wiedergegeben. Ein Träger eines Radarsystems in Form eines schematisiert angedeuteten Flugzeugs 1 soll mit einer Geschwindigkeit $V_v$ fliegen und dabei einen Geschwindigkeitfehler $V_b$ in der Blickrichtung einer nicht näher dargestellten Antenne haben, deren Hauptkeule schematisiert wiedergegeben ist, wobei deren Öffnungswinkel im vorliegenden Fall in der Größenordnung von etwa 17° liegt. Die beiden Geschwindigkeitsgrößen $V_v$ und $V_b$ sind von der Zeit t abhängig und sind daher in der Zeichnung und nachstehend als $V_v(t)$ bzw. $V_b(t)$ bezeichnet. Mit der an dem Flugzeug 1 angebrachten Radar-Antenne wird ein abzubildendes Gelände mit der Antennen-Hauptkeule beleuchtet, welche quer zur Flugrichtung ausgerichtet ist. Als zu erfassende Ziele sind beispielsweise Punktziele A, B, C, D und E in einem gewissen Entfernungstor Et vorgegeben. In der Fig.1 werden nur die Punktziele A, B und C beleuchtet.

Aufgrund der Fluggeschwindigkeit $V_v(t)$ und der Geschwindigkeit $V_b(t)$ in Blickrichtung enthält jedes Rückstreusignal einen Frequenz- oder Dopplerversatz gemäß der nachstehenden G1.(1):

$$F_{doppler} = \frac{2 \cdot V_v(t) \cdot \sin\vartheta}{\lambda} + \frac{2 \cdot V_b(t) \cdot \cos\vartheta}{\lambda} \quad (1)$$

wobei $\vartheta$ der Winkel zwischen der Radarsichtlinie zu dem jeweiligen Punktziel und der Linie senkrecht zum Flugweg ist, (die in dem dargestellten Beispiel durch den Zielpunkt B verläuft) und mit $\lambda$ die Wellenlänge des aus-

gesendeten Radarimpulses bezeichnet ist.

Für das Punktziel A wird mit einem Winkel $\vartheta > 0$ und mit der Fluggeschwindigkeit $V_v(t)$ ein positiver Frequenzversatz erzeugt, während für das Punktziel C bei einem Winkel $\vartheta < 0$ mit einer Fluggeschwindigkeit $V_v(t)$ ein negativer Frequenzversatz erzeugt wird. Für das Punktziel B ( = 0) entsteht durch die Geschwindigkeit $V_v(t)$ kein Frequenzversatz.

In Fig.1b ist schematisch ein Azimutspektrum des Entfernungstors Et dargestellt, wobei auf der senkrechten Achse die Frequenz f und auf der waagrechten Achse die Leistung S bezüglich der drei Punktziele A, B und C aufgetragen ist. Ferner ist links neben der senkrechten Achse angedeutet, daß in positiver Richtung die Frequenz f größer 0 und in negativer Richtung kleiner 0 ist.

In Fig. 2a bis 2c ist in schematischen Kurvenverläufen die Zusammensetzung eines Azimutspektrums wiedergegeben, wobei in den einzelnen Darstellungen auf der senkrechten Achse jeweils die Frequenz f und auf der waagrechten Achse die Leistung S aufgetragen sind. Wie insbesondere den Fig.2b und 2c zu entnehmen ist, setzt sich das in Fig.2a schematisch wiedergegebene Azimutspektrum eines Entfernungstors Et im wesentlichen aus dem Produkt des in Fig. 2b dargestellten Antennendiagramms in der Azimutrichtung und des durch die jeweiligen Zielpunkte beispielsweise A, B und C gegebenen und in Fig.2c dargestellten Rückstreuverhältnisses zusammen wobei unter Rückstreuverhältnis das Verhältnis zwischen der Leistung eines empfangenen und eines gesendeten Signals verstanden wird.

Der in Fig.2b wiedergegebene Antennendiagramm-Anteil eines Azimutspektrums ist durch einen Driftwinkel und durch die Geschwindigkeit in der Antennen-Blickrichtung nach der folgenden G1. (2) in der Frequenz versetzt, wobei sich für einen Frequenzversatz $f_a$ ergibt:

$$f_a \cong \frac{2 \cdot V_v(t) \cdot \sin\varphi(t)}{\lambda} + \frac{2 \cdot V_b(t)}{\lambda} \quad (2)$$

wobei $\varphi(t)$ der Driftwinkel des Trägers ist.

Der Anteil des Rückstreusignalverhältnisses des Azimutspektrums wird nur durch die Geschwindigkeit in der Antennen-Blickrichtung entsprechend der nachstehenden Gl(3) in der Frequenz versetzt. Für diesen Frequenzversatz $f_r$ ergibt sich dann:

$$f_r \cong \frac{2 \cdot V_b(t)}{\lambda} \quad (3)$$

Der Grundgedanke bei dem Verfahren zur Extraktion der Bewegungsfehler eines Trägers in einem mitgeführten kohärenten Abbildungs-Radarsystem besteht darin, daß die beiden in Fig.2b und 2c schematisch wiedergegebenen beiden Anteile eines Azimutspektrums, nämlich der Antennendiagramm-Anteil und der Rückstreuverhältnis-Anteil voneinander getrennt und separat ausgewertet werden.

Hierbei hängt die Genauigkeit des Verfahrens von dem Verlauf des Rückstreuverhältnisses bzw. von dem Kontrast $\tau$ des Azimutspektrums ab. Der Kontrast $\tau$ eines Azimutspektrums ist folgendermaßen definiert:

$$\tau = \frac{\text{Streuung der Leistung des Azimutspektrums}}{\text{Mittelwert der Leistung des Azimutspektrums}} \quad (4)$$

Falls ein abzubildendes Gebiet ein konstantes Rückstreuverhältnis aufweist, ist der Kontrast $\tau$ des Azimutspektrums klein, d.h. die Streuung ist annähernd gleich 0, so daß dann der Spektrumverlauf bzw. der Versatz des Rückstreuverhältnis-Anteils nicht genau festgestellt werden kann. Falls jedoch ein abzubildendes Gebiet unterschiedliche Rückstreuverhältnisse aufweist, d.h. eine Streuung hat, die wesentlich größer als 0 ist, ist auch der Kontrast $\tau$ hoch und die Bestimmung des Spektrumversatzes genau.

Gebiete, wie das Meer, eine Wüste u.ä., haben im allgemeinen ein sehr niedriges konstantes Rückstreuverhältnis, während Gebiete, wie beispielsweise das Festland mit Städten, Wiesen, Bergen usw., kein homogenes Rückstreuverhältnis und damit einen hohen Kontrast im Azimutspektrum aufweisen.

Bei Gebieten, welche kein homogenes Rückstreuverhältnis und damit einen hohen Kontrast aufweisen, wird daher gemäß der vorliegenden Erfindung das sogenannte Versatzverfahren angewendet, während bei Gebieten mit einem geringen Kontrast $\tau$ ein den Antennendiagramm-Anteil benutzendes Verfahren angewendet werden kann, dessen Genauigkeit unabhängig von dem Kontrast $\tau$ erhalten bleibt, und welches Gegenstand einer am selben Tag beim Deutschen Patentamt hinterlegten Patentanmeldung P 39 22 427.9 ist .

Bei dem erfindungsgemäßen Versatzverfahren wird der Versatz zwischen zwei in der Zeit aufeinanderfolgenden Azimutspektren ausgewertet. In Fig.3 sind zwei solcher Azimutspektren dargestellt, und zwar im oberen Teil für die Zeit t = i - 1 und im unteren Teil für die Zeit t = i, wobei i eine ganze Zahl größer 1 ist. In den beiden Azimutspektren sind diesmal auf den vertikalen Achsen die Leistung S in Abhängigkeit von der Frequenz f auf der horizontalen Achse aufgetragen. Ferner ist in dem unteren Diagramm noch ein Versatz V(i) eines Maximums gegenüber dem Azimutspektrum im oberen Teil der Fig.3 eingezeichnet.

Wie vorstehend bereits erläutert, muß beim Einsatz des Versatzverfahrens das abzubildende Gebiet unterschiedliche Rückstreuverhältnisse aufweisen, so daß die das Rückstreuverhältnis wiedergebenden Kurven keinen konstanten Verlauf haben, wie es bei beiden Azimutspektren in Fig.3 der Fall ist. Hierbei hat der Verlauf eines Rückstreuverhältnisses immer eine negative Frequenzverschiebung, da ein das Radarsystem mitführender Träger (1) immer in Vorwärtsrichtung fliegt und damit alle Streuer, d.h. alle Objekte, die vom Radar beleuchtet und zurückgestreut werden, einen negativen Verlauf des Dopplerversatzes erhalten.

Damit sind zwei nacheinander aufgenommene Spektren einander sehr ähnlich, und es wird nach einer entsprechenden Entwicklung eine aus den G1.'en 1 und 3 abgeleitete Frequenzverschiebung mit einem Frequenzversatz V (in Hz) erhalten:

$$V = \frac{2 . V_v^2(t) . \Delta t}{\lambda . R} + \frac{2 . \dot{V}_b(t) . \Delta t}{\lambda} \quad (5)$$

wobei R die Entfernung des Entfernungstors von der am Träger 1 angebrachten Antenne und $\Delta t$ der Zeitabstand zwischen den zeitlich nacheinander aufgenommenen Spektren ist. Wie im unteren Teil der Fig. 3 wiedergegeben, läßt sich der Versatz durch die Lage eines Maxiums mit Hilfe einer Korrelation der beiden Spektren bestimmen, wie im rechten Teil der Fig.3 schematisch angedeutet ist, wobei dann bezogen auf das dargestellte Beispiel sich der in Fig. rechts dargestellte Kurvenverlauf ergibt; hierbei ist auf der vertikalen Achse die Amplitude in Abhängigkeit von dem auf der horizontalen Achse aufgetragenen Versatz $f_v$ und der Größe i wiedergegeben.

Ein Blockdiagramm einer Einrichtung zur Durchführung des den Rückstreuverhältnis-Anteil berücksichtigenden Verfahrens zur Extinktion von Bewegungsfehlern eines ein Abbildungsradarsystem mitführenden Trägers, ist im einzelnen in Fig.4 wiedergegeben. Zur Abbildung eines Gebiets mit unterschiedlichen Rückstreuverhältnissen wird dieses Gebiet mittels der Hauptkeule einer an einem Flugzeug 1 angebrachten Antenne beleuchtet. Hierdurch werden über einen bestimmten Zeitraum mit einer Einrichtung 40 zur Erfassung von Azimutspektren fortlaufend, zeitlich aufeinanderfolgend, d.h. zu unterschiedlichen Zeitpunkten i (wobei i ein ganzzahliger Wert größer 1 ist) zeitlich aufeinanderfolgende Azimutspektren erfaßt, wobei dieser Zeitraum zur Aufnahme der Daten viel kürzer ist als die Zeit, welche das Flugzeug benötigt, um das abzubildende Gebiet zu überfliegen. Zwei derartiger Azimutspektren sind für die Zeitpunkte t = i - 1 sowie t = i als Beispiele im linken Teil der Fig.3 schematisiert dargestellt. Die zeitlich nacheinander in Abhängigkeit von der Radarfrequenz f aufgenommenen Azimutspektren mit einer Leistung S (f, i) werden an eine Einrichtung 41 zur Bildung von Korrelationen zwischen jeweils zwei zeitlich unmittelbar nacheinander aufgenommenen Azimutspektren gebildet, nämlich K (f,i) = S(f,i) ⊛ S(f,i-1). In der nachgeordneten Einrichtung 42 zur Bildung des Maximums einer Korrelation K(f,i) wird dann anhand der Lage eines Maximums der Frequenzversatz V(i) des Rückstreuverhältnis-Anteils bestimmt, was schematisiert dem rechten Teil der Fig.3 zu entnehmen ist und der vorstehend wiedergegebenen G1.(5) entspricht.

Die Trennung der Vorwärtsgeschwindigkeit $V_v(t)$, welche im ersten Term der G1. (5) enthalten ist, von der Beschleunigung $\dot{V}_b(t)$ in Blickrichtung des Entferungstors Et, welche im zweiten Term der G1. (5) enthalten ist, wird, wie in Fig.4 dargestellt, durch ein Hochpaßfilter 47 bzw. ein Tiefpaßfilter 43 durchgeführt. Dies ist möglich, da die Vorwärtsgeschwindigkeit $V_v$ bei Windboen bis zu 1m/s eine sehr niedrige Bandbreite aufweist, die beispielsweise von 0 bis 0,1 Hz reicht. Die Beschleunigung $\dot{V}_b$ in der Antennen-Blickrichtung hat dagegen eine wesentlich größere Bandbreite, wobei obendrein nur die höheren Frequenzenanteile für eine Bewegungskompensation von Bedeutung sind, wobei beispielsweise nur Frequenzanteile ab 0,2Hz zu berücksichtigen sind.

Damit die Ermittlung der Ablage in der Antennen-Blickrichtung möglich ist, werden die von dem Hochpaßfilter 47 durchgelassenen Daten in Integriereinheiten 44 einer zweifachen Integration unterzogen und anschließend in einer Normiereinheit 45 normiert, während vom Tiefpaßfilter 43 durchgelassenen Frequenzanteile zur Bestimmung der Vorwärtsgeschwindigkeit lediglich in einer Normiereinheit 46 einer Normierung unterzogen werden müssen. Am Ausgang der Normiereinheit 45 werden dann als Bewegungsdaten die Ablage, d.h. die Abweichung in Blickrichtung der Antenne erhalten, während am Ausgang der Normiereinheit 46 als Bewegsungsdaten die Vorwärtsgeschwindigkeit erhalten wird.

Das erfindungsgemäße Verfahren, welches vorstehend wiederholt auch als Versatzverfahren bezeichnet worden ist, hat beispielsweise gegenüber den eingangs angeführten, in vielen Fällen verwendeten Trägheitsnavigationssystemen den Vorteil, daß sich das vorliegende Bewegungsextraktionsverfahren prinzipiell erheblich preiswerter realisieren läßt, und daß sich die erforderlichen Rechenvorgänge mit den heute zur Verfügung stehenden Rechensystemen und -anlagen sowohl in Echtzeit als auch Off-line besonders leicht und schnell durchführen lasssen.

Wie vorstehend bereits erwähnt, kann das hier als Versatzverfahren bezeichnete, erfindungsgemäße Verfahren nur dann mit Erfolg angewendet werden, wenn das abzubildende Gebiet kein homogenes Rückstreuverhältnis, d.h. einen verhältnismäßig hohen Kontrast τ aufweist, was bei Abbildungen von Gebieten über dem Festland, d.h. bei der Abbildung von Land, Städten, Wiesen, Bergen u.ä. der Fall ist. Bei der Abbildung von Gebieten mit einem weitgehend homogenen Rückstreuverhältnis, d.h. mit einem niedrigen Kontrast τ, was bei

der Abbildung der See, einer Wüste u.ä. der Fall ist, würden mit dem vorstehend beschriebenen Versatzverfahren nur ungenaue Ergebnisse erhalten werden können.

Im Falle eines geringen Kontrastes $\tau$ muß daher der in Fig.2b schematisiert dargestellte Antennendiagramm-Anteil eines Azimutspektrums ausgewertet werden. Hierzu wird dem Azimutspektrum der jeweilige Rückstreuverhältnisanteil entnommen, welcher beispielsweise in Fig.2c dargestellt ist. Es wird dann die Ähnlichkeit nacheinander aufgenommener Azimutspektren verwendet, um das Rückstreusignalverhältnis zu schätzen. Falls das Rückstreusignalverhältnis gut geschätzt werden kann, kann der Antennendiagramm-Anteil dadurch bestimmt werden, daß das erhaltene Azimutspektrum jeweils durch das geschätzte Rückstreuverhältnis geteilt wird. Hierbei wird die Genauigkeit der Schätzung bei gleichmäßigeren Rückstreusignal-Verläufen, d.h. bei einem niedrigen Kontrast $\tau$ höher, da sich dann der Antennendiagramm-Anteil immer deutlicher erkennen läßt.

Hierbei entspricht der Schwerpunkt des jeweiligen Antennendiagramm-Anteils dem in G1.(2) angegebenen Frequenzversatz $f_a$. Durch geeignete Frequenzfilterungen wird dann die Trennung des Driftwinkels $\varphi(t)$, welcher im ersten Term der G1.(2) enthalten ist, von der Geschwindigkeit $V_b(t)$ in der Blickrichtung des Entfernungstors Et durchgeführt, wobei diese Geschwindigkeit im zweiten Term der G1.(2) enthalten ist.

Eine derartige Trennung mit Hilfe einer Frequenzfilterung ist möglich, da der durch Wind hervorgerufene Driftwinkel eine sehr niedrige Bandbreite von beispielsweise 0 bis 0,1Hz aufweist, während die Geschwindigkeit $V_b$ in Blickrichtung der Antenne eine wesentlich höhere Bandbreite hat, wobei auch hier wieder nur die höheren Frequenzanteile für die Bewegungskompensation wichtig sind, d.h. Frequenzanteile ab 0,2Hz. Die Ablage, d.h. die Abweichung in Blickrichtung der Antenne wird auch hier wieder durch eine einfache Integration der Geschwindigkeit in Blickrichtung der Antenne gewonnen.

Eine gezielte Anwendung der beiden vorgenannten Verfahren wird dann in optimaler Weise erreicht, wenn der Kontrast eines Azimutspektrums ständig ausgewertet und dem Verfahren, welches jeweils die genaueren Werte liefert, mehr Gewichtung bei der Ermittlung der Ablage, d.h. der Abweichung in Blickrichtung gegeben wird.

In Fig.5 ist ein Blockdiagramm zur Verknüpfung beider Verfahren wiedergegeben. Für ein Gebiet, wie beispielsweise die See oder eine Wüste, mit einem homogenen Rückstreuverhältnis wird, wie vorstehend bereits ausführlich ausgeführt, dessen Azimutspektrum einen geringen Kontrast $\tau$ aufweisen, so daß das zuletzt beschriebene Verfahren das genaueste Ergebnis liefert. Dagegen wird für ein Gebiet, wie beispielsweise Land, Wald und/oder Stadt, mit unterschiedlichen Rückstreuverhältnissen dessen Azimutspektrum einen hohen Kontrast aufweisen, so daß das erfindungsgemäße Versatzverfahren das genaueste Ergebnis liefert.

Eine Gewichtung der beiden Verfahren wird in Fig.5 durch einen Faktor k bestimmt. Hierbei wird nach dem augenblicklichen Kontrast $\tau$ des Azimuts der Faktor k jeweils Werte zwischen 0 und 1 annehmen; dies bedeutet in der Praxis, daß für geringe Kontraste $\tau$, d.h. $\tau \rightarrow 0$, der Faktor k gegen 1 (d.h. $k \rightarrow 1$) geht, während für große Kontraste $\tau$, d.h. $\tau \gg 0$ der Faktor k gegen 0, d.h. $k \rightarrow 0$ geht.

Zur Bildung der Ablage, d.h. der Abweichung in Blickrichtung der Antenne werden daher im Blockschaltbild der Fig.5 einer Einrichtung 50 zur Erfassung von Azimutspektren eine Einrichtung 51 zur Durchführung des Verfahrens bei niedrigem Kontrast $\tau$ ($\tau \rightarrow 0$) und eine Einrichtung 53 zur Bildung des Faktors k nachgeschaltet, während einer Einrichtung 52 zur Durchführung des Versatzverfahrens (bei einem Kontrast $\tau \gg 0$) bzw. der Normierungseinheit 45, wie im einzelnen in Fig .4 dargestellt ist, eine Einrichtung 54 zur Bildung der Differenz (1 - k) nachgeschaltet ist.

## Patentansprüche

1. Verfahren zur Extraktion von Bewegungsfehlern eines Trägers (1) in einem mitgeführten, kohärenten Abbildungsradarsystem aus Rohdaten, in welchem zur Abbildung von Gebieten mit unterschiedlichen Rückstreuverhältnissen, worunter die Verhältnisse zwischen der Leistung eines empfangenen und eines gesendeten Signals zu verstehen sind, über einen bestimmten Zeitraum fortlaufend zeitlich aufeinanderfolgende Azimutspektren gebildet werden, die sich aus dem Produkt eines Antennendiagramms in der Azimutrichtung und eines durch Zielpunkte gegebenen Rückstreuverhältnisses zusammensetzen und die sich in zwei Anteile, nämlich einen Antennendiagramm-Anteil und ein Rückstreuverhältnis-Anteil aufteilen lassen, dadurch **gekennzeichnet,**
daß ein Frequenzversatz des Rückstreuverhältnis-Anteils durch die Bestimmung der Lage des Maximums der Korrelation jeweils zwischen zwei zeitlich unmittelbar nacheinander gebildeten Spektren von Rückstreuverhältnissen gewonnen wird;
daß durch Frequenzfilterung eine Trennung einer - anschließend noch zu normierenden - Geschwindigkeit ($V_v(t)$) in Vorwärtsrichtung von einer Beschleunigung ($\dot{V}_b(t)$) in der Antennen-Blickrichtung durchgeführt wird, und

daß schließlich die erhaltene Beschleunigung ($\dot{V}_b(t)$) in der Antennen-Blickrichtung einer zweifachen Integration unterzogen wird, um nach einer anschließenden Normierung die Ablage in der Antennen-Blickrichtung zu erhalten.

2. Einrichtung zur Durchführung des Verfahrens nach Anspruch 1, mit einer Azimut-Erfassungseinrichtung (40), um fortlaufend zeitlich aufeinanderfolgende Azimutspektren zu bilden, die sich aus dem Produkt eines Antennendiagramms in der Azimutrichtung und eines durch Zielpunkte gegebenen Rückstreuverhältnisses zusammensetzen, worunter ein Verhältnis zwischen der Leistung eines empfangenen und eines gesendeten Signals zu verstehen ist, und die sich in zwei Anteile, nämlich einen Antennendigramm-Anteil und einen Rückstreuverhältnis-Anteil aufteilen lassen, und mit einer Einrichtung zur Korrelationsbildung zwischen jeweils zwei zeitlich unmittelbar nacheinander gebildeten Spektren von Rückstreuverhältnissen,

**gekennzeichnet** durch

eine Einrichtung (42) zur Bildung des Maximums der Korrelation; ein Hochpaßfilter (47), welchem zur Bestimmung der Ablage in der Antennen-Blickrichtung zwei Integriereinheiten (44) sowie eine Normiereinheit (45) nachgeordnet sind, und ein Tiefpaßfilter (43), welchem zur Bestimmung der Vorwärtsgeschwindigkeit eine weitere Normiereinheit (46) nachgeschaltet ist.

## Claims

1. Method for extracting motion errors of a carrier (1) transporting a coherent imaging radar system from radar raw data, imaging terrains with varied ground reflectivities which are understood to be the ratio between the output of a received and a transmitted signal, forming azimuth spectra continuously successive in time over a set period of time which are composed of the product of an antenna pattern in the azimuth direction and of the ground reflectivity given by target points and which may be separated in two parts, namely an antenna pattern part and a ground reflectivity part, characterized in

that a frequency shift of the ground refelctivity part is obtained by determining the position of the maximum of the correlation of two azimuth spectra of the ground reflectivity formed immediately following each other in time;

that a separation of a velocity ($V_v(t)$) in the forward direction - which later must be normalized - from an acceleration ($\dot{V}_b(t)$) in the line of sight direction of the antenne is performed by frequency filtering; and that the obtained acceleration ($\dot{V}_b(t)$) in the line of sight direction is subjected a two-fold integration to obtain after a following normalization the displacement in the line of sight direction of the antenna.

2. Device for executing the method in accordance with claim 1, comprising an azimuth spectrum detection device (40), for forming azimuth spectra continuously following each other in time which are composed of the product of an antenna pattern in the azimuth direction and of a ground reflectivity given by target points which is understood to be the ratio between the output of a received and a transmitted signal and which may be separated in two parts, namely an antenna pattern part and a ground reflectivity part, and means for forming the correlation between two ground reflectivity spectra formed immediately following each other in time, characterized by

means (42) for forming the maximum of the correlation;

a high-pass filter (47) for determining the displacement in the line of sight direction of the antenna, downstream of which two integrating units (44) and a normalization unit (45)are arranged; and a low-pass filter (43) downstream of which a further normalization unit (46) is arranged for the determination of the forward velocity.

## Revendications

1. Procédé pour l'extraction d'erreurs du mouvement d'un porteur (1) dans un système de radar d'imagerie cohérent embarqué, à partir de données brutes, procédé dans lequel pour la représentation de zones présentant des conditions de rétrodiffusion différentielles, c'est-à-dire des conditions entre la performance d'un signal reçu et d'un signal émis, des spectres azimutaux se succédant dans le temps en continu pendant une durée déterminée, qui se composent du produit d'un diagramme d'antenne dans la direction azimutale et d'un rapport de rétrodiffusion donné par des points de cibles et qui peuvent être divisés en deux parties, à savoir en une partie de diagramme antenne et en une partie de condition de rétrodiffusion, caractérisé en ce qu'un décalage de fréquence de la portion de la condition de rétrodiffusion est obtenu par la détermination de la position du maximum de la corrélation chaque fois entre deux spectres qui se suivent directement dans le temps, spectres des conditions de rétrodiffusion ;

en ce que par filtrage de la fréquence on effectue une séparation d'une vitesse -qui reste encore à normaliser- ($V_v$(t)) dans la direction avant d'une accélération ($\dot{V}_b$(t)) dans la direction de visée d'antenne, et en ce que pour finir, l'accélération obtenue ($\dot{V}_b$(t)) dans la direction de visée de l'antenne est soumise à une intégration double pour obtenir après normalisation consécutive la dérive dans la direction de visée de l'antenne.

2. Dispositif pour réaliser le procédé selon la revendication 1, avec un système de saisie azimutale (40) permettant de former des spectres azimutaux se suivant de façon continue dans le temps et qui se composent du produit d'un diagramme d'antenne dans la direction azimutale et d'un rapport de rétrodiffusion donné par les points de visée, un rapport devant ici être compris comme étant le rapport entre la performance d'un signal reçu et d'un signal émis, et qui peut être divisé en deux parties, en l'occurrence en une partie de diagramme d'antenne et en une partie de rapport de rétrodiffusion, et avec un dispositif pour la formation de corrélation entre respectivement deux spectres de rapport de rétrodiffusion formés de façon directement successive dans le temps, caractérisé par un dispositif (42) destiné à la formation du maximum de la corrélation, d'un filtre passe-haut (47) auquel sont affectées pour la détermination de la dérive dans la direction de visée de l'antenne deux unités d'intégration (44) ainsi qu'une unité de normalisation (45), et un filtre passe-bas (43) auquel est affecté en aval pour la détermination de la vitesse avant une autre unité de normalisation (46).

Fig.1b

Fig.1a

9

Fig.2a          Fig.2b          Fig.2c

EP 0 406 877 B1

Fig. 3

# Fig.4

40 — Einr. zur Erfassg. des Azimutspektrums (Zeitpunkt i)

S(f,i)

41 — Einrichtung zur Korrelationsbildung
$K(f,i) = S(f,i) \circledast S(f,i-1)$

K(f,i)

42 — Einr. z. Bildg. v. Maximum einer Korrelation von K(f,i)

V(i)

47 — HP

43 — LP

44

44

45 — Normier-einheit → Ablage in Blickrichtung der Antenne

46 — Normier-einheit → Vorwärts-geschwindigkeit

Fig. 5

Drift-winkel

Ablage in Blickrichtung der Antenne

Vorwärts-geschwindigkeit

Einrichtung zur Bildung v. K — 53

Einrichtung z. Bildung v. (1-K) — 54

Einrichtg. z. Durch-führg. v. Verfahren bei τ → 0 — 51

Einrichtg. z. Durch-führung v. Ver-fahren bei τ >> 0 — 52

Einrichtg. z. Erfassg. v. Azimutspektrum — 50

+    +